(19) Europäisches Patentamt
European Patent Office
Office européen des brevets

(11) EP 3 995 852 A1

# (12) EUROPEAN PATENT APPLICATION

(43) Date of publication:
**11.05.2022 Bulletin 2022/19**

(21) Application number: **20206080.2**

(22) Date of filing: **06.11.2020**

(51) International Patent Classification (IPC):
***G01S 7/497*** $^{(2006.01)}$ ***G01S 7/481*** $^{(2006.01)}$
***G01S 17/10*** $^{(2020.01)}$ ***G01S 17/88*** $^{(2006.01)}$

(52) Cooperative Patent Classification (CPC):
**G01S 7/4815; G01S 7/497; G01S 17/10; G01S 17/88**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **SICK AG**
  **79183 Waldkirch (DE)**
- **Fondazione Bruno Kessler**
  **38123 Povo (TN) (IT)**

(72) Inventors:
- **Zwölfer, Ulrich**
  **79183 Waldkirch (DE)**
- **Perenzoni, Matteo**
  **38123 Povo (TN) (IT)**

(74) Representative: **Hehl, Ulrich**
**SICK AG**
**Intellectual Property**
**Erwin-Sick-Strasse 1**
**79183 Waldkirch (DE)**

## (54) MEASURING A DISTANCE OF AN OBJECT

(57) An optoelectronic sensor (10) for measuring a distance of an object (18) in a monitoring area (16) in accordance with a time of flight principle, the sensor (10) comprising a light transmitter (12) for transmitting a light signal (14), a light receiver (22) having a first plurality of avalanche photodiode elements (24) operable in a Geiger mode for receiving the light signal (20) after reflection or remission in the monitoring area (16), at least one time of flight measuring unit (30) connected to an avalanche photodiode element (24) for determining time of flight information between transmission and reception of a light signal (14, 20), and a control and evaluation unit (34) configured to process the time of flight information, wherein the sensor (10) comprises an internal test illumination (28) configured to additionally illuminate the avalanche photodiode elements (24), and wherein the control and evaluation unit (34) is further configured for self-testing the sensor (10) by comparing first time of flight information obtained with the internal test illumination (28) active and second time of flight information obtained with the internal test illumination (28) inactive.

Figure 1

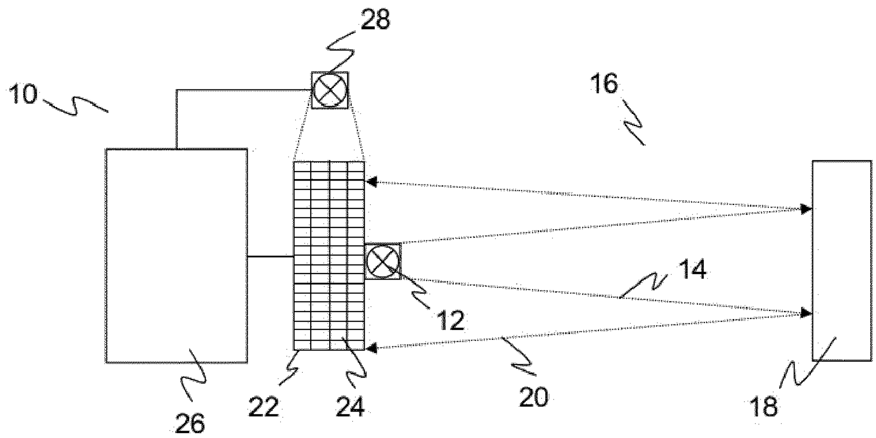


EP 3 995 852 A1

Figure 1

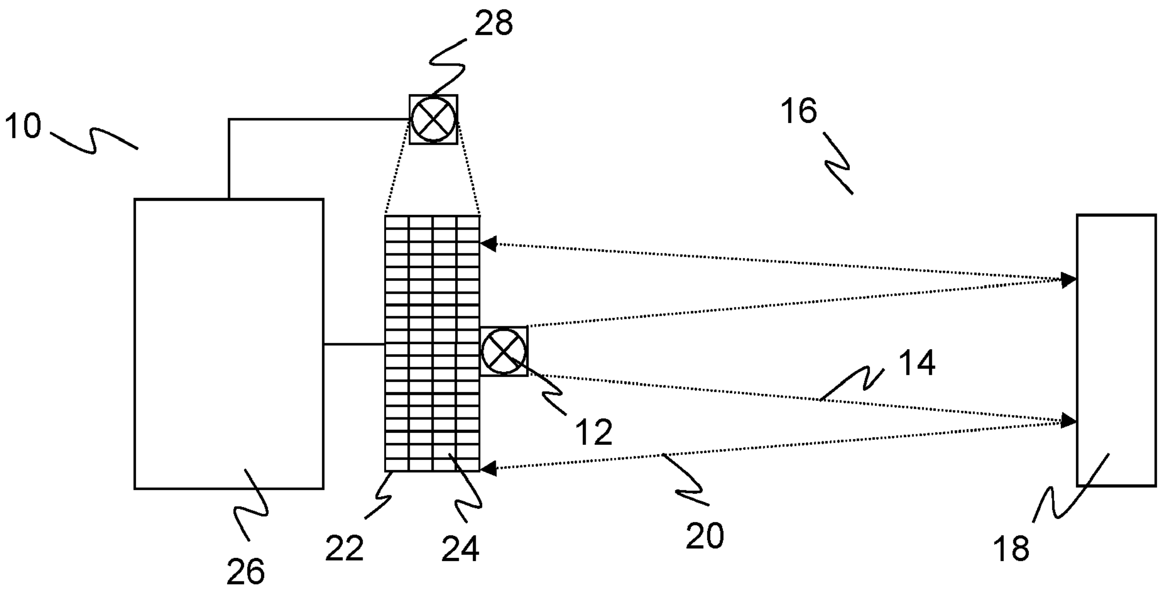

## Description

The invention relates to an optoelectronic sensor and a method for measuring a distance of an object in a monitoring area using a time of flight principle in accordance with the preamble of claims 1 and 14, respectively.

The distance of objects can be determined in accordance with the known light time of flight principle using optoelectronic sensors. A short light pulse is transmitted and the time until detection of the remitted or reflected light pulse is measured. Alternatively, in a phase method, the amplitude of transmitted light is modulated and a phase shift between the transmitted light and the received light is determined, with the phase shift being a measure for the time of flight.

An optoelectronic sensor comprises a light receiver generating an electrical signal from incident reception light. The detection sensitivity of simple photo diodes is not sufficient in many applications. In an avalanche photo diode (APD), the incident light triggers a controlled avalanche breakdown (avalanche event). This multiplies the charge carriers generated by incident photons, and a photo current is produced which is proportional to the light reception level but significantly larger than in a simple PIN diode. In a so-called Geiger mode, the avalanche photo diode is biased above the breakdown voltage so that even a single charge carrier generated by a single photon can trigger an avalanche, which subsequently recruits all available charge carriers due to the strong field. Hence, the avalanche diode counts individual events like a Geiger counter from which the name is derived. Geiger mode avalanche photo diodes are also called SPAD (Single Photon Avalanche Diode).

Geiger APDs or SPADs thus are very fast, highly sensitive photo diodes on a semiconductor basis. They have some specific properties due to their almost digital response and the fact that, following an avalanche breakdown, they become insensitive for a dead time in the order of tens to hundreds of ns. Because of the dead time, the number of SPADs actually available for measurement is not constant over time, an effect sometimes referred to as pileup. Moreover, the event triggering an avalanche breakdown may range between a single measurement photon or a strong useful signal, resulting in an advantageous huge dynamical range. On the other hand, the same response will follow just a single ambient light photons or other interference like optical cross talk or dark noise so that adequate, usually statistical evaluation methods are required.

A distance measurement can be used in a large variety of fields like in factory automation, logistics automation or safety engineering. Possible applications include modified light barriers, monitoring the distance between their transmitter and receiver or reflector, respectively, or switching systems with binary object presence detection, the switching state depending on whether there is an object in a specified distance range. Laser scanners are also based on time of flight measurement to determine distances at respective angular positions.

In order for a sensor to be used in safety applications, or to be a safety sensor, it has to be reliable according to well-defined criteria that are set by safety standards, for example the EN13849 standard for safety of machinery and the machinery standard EN61496 for electrosensitive protective equipment (ESPE). Other standards to be mentioned are IEC61508 / IEC61511 for safety of an industrial process, defining safety levels (SIL, safety integrity level). To satisfy these safety standards, a series of measures has to be taken that relate to the entire chain from light detection through evaluation to output of a safety-related signal for example stopping a monitored machine. One typical approach is use of redundant, diverse electronics, also called a two-channel or multi-channel architecture. This is costly because hardware components are doubled or multiplied. Another approach is based on self-testing, either cyclically or on demand. A safety sensor is failsafe usually not in that it continues to work in spite of a fault, but in that the fault is detected, be it as a discrepancy between channels or a negative self-testing, so that the system can refuse to continue work and secure a monitored machine or other source of danger in time.

A self test can in principle be subject to faults of a first and second kind. A fault of a first kind would be that the system no longer works without the self test being aware. This must be avoided at all costs in a safety system. One typical demand is single fault safety, i.e. the system only does not recognize such a fault in the extremely unlikely case that two complementary faults that are not based on a common cause occur simultaneously by chance. A fault of a second kind means that a safety-related shutdown takes place even though the system is still fully functional from an objective point of view. This is never a safety problem, but does reduce the availability and results in unwanted and cost-intensive standstills and in unnecessary repairs or device replacements.

A two-channel approach based on redundant hardware components that is common for today's safety light grids and laser scanners in industrial applications is not only costly, but also not easily applicable when using Geiger APDs or SPADs. There is a need to manage the peculiarities like pileup and impact of interference.

For conventional sensors that do not comprise SPADs, it is known to detect faults of the light detector using internal test light. EP 0 902 402 B1 discloses an optical monitoring system based on a camera that can be dazzled by an LED on demand, the resulting image being compared to a reference image. The system also has other test components, like cyclically sending test signals to the evaluation. EP 1 269 762 B1 is about a camera having a testing device that can add an artificial dynamic effect to the image, one of the effects being illumination of parts of the monitoring area or of the imager itself. DE 10 2007 008 806 B3 discloses a time-of-flight camera having a testing unit that is configured to internally direct test light having a defined delay onto the detector, so that not only the sensitivity of the detector, but at the same time the time of flight evaluation can be tested against a reference delay. Lacking SPADs in the first place, these documents do not contribute to manage pileup or any other SPAD-specific properties.

In DE 10 2018 124 837 B3, a safety laser scanner has an internal reference target that is used to adapt the sensitivity of the detection by a control of the detector, an amplifier, or the light transmitter. This may prolong the safe operating time or uncover a fault of the light transmitter, but does not cover safety issues in the receiving and evaluation path.

An optoelectronic sensor for measuring a distance in accordance with a time of flight principle based on Geiger APDs or SPADs is known from EP 3 428 683 B1. However, the document is silent about safety aspects.

It is therefore an object of the invention to provide a more reliable SPAD-based time of flight measurement.

This object is satisfied by an optoelectronic sensor and a method for measuring a distance of an object in a monitoring area using a time of flight principle in accordance with claims 1 and 14, respectively. As usual in a time of flight measurement, a light transmitter transmits a light signal which is received in a light receiver after diffuse remission or direct reflection at an object whose distance is to be measured. Preferably, the light signal comprises a short pulse, so that a pulse-based method is used, also referred to as direct time of flight (dToF). The light receiver comprises a plurality of avalanche photodiode elements or pixels that can be operated in a Geiger mode where they are biased with a bias voltage greater than a breakdown voltage in order to trigger an avalanche event upon light reception. The term SPAD will be used as a substitute for avalanche photodiode elements operable in Geiger mode on several occasions in this specification. At least one time of flight measuring unit is connected to a SPAD in order to measure time of flight information about the time of flight between transmission and reception of a light signal. A control and evaluation unit processes the time of flight information, where determining a distance value is one possible task.

The invention starts from the basic idea to add self-testing capabilities in order to detect faults in the sensor and its measurement. The self test preferably makes or contributes to making the sensor a safety sensor that is failsafe, in particular according to a safety standard for industrial processes, machine safety, or electrosensitive protective equipment as mentioned in the introduction. It is worth mentioning that this is more general than any single specific standard, because the relevant standards may vary over time, but underlying safety principles like two-channel architecture and well-defined testing to detect faults do not.

The sensor comprises an internal test illumination that the control and evaluation unit may switch on and off, or vary in its intensity or other illumination characteristics, so that the SPAD activity may temporarily be artificially increased in a well-defined manner. The internal illumination is added to the effects registered by the SPADs, which are the received light signal, ambient light, dark currents, and others. For self-testing, the control and evaluation unit compares first time of flight information obtained with added internal test illumination and second time of flight information obtained without internal test illumination. The comparison should match an expectation that for example has been taught in or calibrated in advance, or has been derived from simulation, calculation, theoretical considerations or models. In case there are difference beyond a defined tolerance, the self-testing has not been successful, and the sensor is no longer reliable. This results, for example, in a maintenance signal or a safety-related signal stopping a monitored machine or otherwise providing a safe state of a monitored source of danger.

The invention has the advantage that it is possible to make a dToF sensor based on SPADs safe even though it may have a one-channel receiving path only. By using diverse physical features, even higher safety levels (SIL) are possible. Hardware costs are low, because there is no need for redundant hardware components with just the internal illumination being added. The remainder of the self-testing can merely be based on implementations in the control and evaluation unit. The invention is not only capable of managing peculiarities of SPADs, but even may make use of them in order to increase reliability.

The internal illumination preferably is only some percentage of the expected interference effect level, i.e. at most 100%, 80%, 50%, 20%, 10%, 5% or less. Then, the sensor is still functional while obtaining first time of flight information, this is not just test data, but can still be used for distance measurement.

The sensor preferably comprises a second plurality of time of light measurement units, the second plurality being less than the first plurality. In other words, there are less time of flight measuring units than avalanche photodiode elements. This is in order to cope with a large number of avalanche photodiode elements or pixels, only a selected portion of the avalanche photodiode elements is actually connected to a time of flight measuring unit. Otherwise, it would need hundreds or thousands of time of flight measuring units. One or more SPADs can be connected per time of flight measuring unit in a one-to-one or a many-to-one fashion. A one-to-one-relation is preferred, since this has proven to generate time of flight information whose evaluation is far superior to macro pixel data.

The time of flight measuring units preferably each comprise a TDC. This is a very robust component which can easily be integrated on a chip of the light receiver. The TDC for example is started by an electronic signal also triggering the light transmitter, or by an optical reference signal, and is stopped by a signal generated in a respective connected avalanche photodiode element. Another possible TDC mode of operation would be triggering a TDC by the signal from an avalanche event and commonly stopping all active TDCs with a reference signal. This has the advantage that, instead of starting all TDCs upon light transmission, only those TDCs are activated where actually an avalanche event is observed, and thus the required bandwidth for data transfer and power consumption is reduced. The avalanche event is meant to be due to reception of at least one photon of the transmitter's light signal, but may also be caused by ambient light, dark noise or other interference. This is indistinguishable at this stage, but can be dealt with by statistically evaluating larger numbers of avalanche events. The number of TDCs is large enough to provide TDCs for the required number of selected avalanche photodiode elements, but significantly smaller than the total number of avalanche photodiode elements. For example, the ratio is at most 20%, 10%, 5%, 1% or, in particular in case of a light receiver with several thousands of SPADs, even less. The TDCs preferably form a TDC array.

The sensor preferably comprises switching means for connecting selected avalanche photodiode elements to time of flight measuring units. Thus, the connection of time of flight measuring units and avalanche photodiode elements is not fixed, but can be switched. This is not multiplexing, because once switched, the connections remain stable at least for some period of distance measurements. Preferably, the sensor comprises a pixel selection unit for determining avalanche photodiode elements to be connected by the switching means. The selection may based on an intensity measurement which for example identifies avalanche photodiode elements that actually receiving part of the transmitter's light signal. Any other selection criteria are also possible. The selected avalanche photodiode elements may form a region of interest (ROI). However, the invention also includes the case that selected avalanche photodiode elements do not have any specific neighborhood or other spatial properties. The term ROI is to be understood in this broader sense, where the selected avalanche photodiode elements may be individually distributed over the light receiver in almost any conceivable arrangement.

The switching means preferably comprise a matrix of programmable interconnections. This enables assigning any of the selected avalanche photodiode elements with any one of the time of flight measuring units and therefore a flexible establishing of connections without limitations as to which avalanche photodiode elements can be selected.

The sensor preferably comprises a first circuit, in particular an ASIC, for the avalanche photodiode elements and the time of flight measuring units, and a second circuit, in particular a microprocessor, for the control and evaluation unit. The switching means, if any, are also part of the first circuit. By distributing the measurement task to an ASIC and a microprocessor, efficiency and a high degree of integration can be combined with flexibility of evaluation.

The sensor preferably comprises a memory for accumulating time of flight information over a plurality of time of flight measuring units and/or a plurality of measurement repetitions. The memory may be part of the first circuit, the second circuit, or of another component. Each event detected by an avalanche photodiode element is an event that can be used to measure an individual time of flight. However, as mentioned on various occasions, the signal of an individual avalanche photodiode element in Geiger mode is unreliable, because it is undistinguishable whether it originates from photons of the transmitted and remitted light signal or is just an interference event. Conventional macro pixels make use of an averaging effect right at the front of the evaluation chain, with the adverse effect that information is lost for more sophisticated downstream statistical methods. Preferably, the relevant original time information is preserved, and a statistical evaluation is postponed until enough avalanche events are available after spatial and/or temporal accumulation over a plurality of time of flight measuring units and/or a plurality of measurement repetitions.

The accumulated time of flight information is preferably stored in the form of a histogram. A histogram is the discrete equivalent of a frequency distribution, i.e. a function having the possible times of flight on the X-Axis and the frequency of occurrence of a respective time of flight on the Y-Axis. In a histogram, the X-Axis is divided into discrete bins, with the corresponding frequency of occurrence of count stored therein. The control and evaluation accesses the memory and evaluates the histogram, for example locating a maximum in order to distinguish events or times of flight originating from the light signal from interference. A search for a maximum should consider the underlying exponential decrease of the count due to the pileup.

The control and evaluation is preferably configured to, during the self-testing, compare accumulated time of flight information, in particular a first histogram accumulated with the internal test illumination active and a second histogram accumulated with the internal test illumination inactive. Thus, the comparison of the self test is based not on individual events, but statistical data accumulated over a plurality of time of flight measuring units and/or a plurality of measurement periods. The self test thus is considerably more reliable. The accumulated time of flight data preferably is available in the form of histograms, allowing simple access and comparison.

The control and evaluation unit preferably is configured to, during the self-testing, compare time of flight information for an initial avalanche photodiode element activity at the beginning of a measurement. Usually, with the start of a measurement that except for a possible delay is when the light signal is transmitted, or at the start of each repeated measurement in the case of a plurality of measurement periods, all avalanche photodiode elements are still available. This can be reinforced by a gating, i.e. setting a bias voltage above the breakdown voltage only at that time when measurement starts. Thus, looking at the time of flight information for that time, the pileup effect does not yet complicate matters, the behavior is linear to a very good degree. Later on in the measurement, the exponential decrease and the peak of the received light signal have a non-linear impact that differs depending on whether the internal illumination is active and inactive, thus making it more difficult to define the expectation for reliable operation of the sensor. The initial avalanche photodiode element activity can be defined as the value of the frequency distribution at time t=0, or the first bin of a histogram in the discrete case. In particular, looking at a first bin of a first histogram accumulated with the internal test illumination active (count = N1) and in a first bin of a second histogram accumulated with the internal test illumination inactive (count = N0), there is an expectation about the difference $\Delta$=N1-N0 that, if violated by more than a tolerance threshold, indicates a failed self test and thus a faulty sensor.

The control and evaluation unit preferably is configured to cyclically activate the internal test illumination for self-testing, and/or to output an error or a safety-related signal in case of a failed self-testing. A cyclical self test, with a cycle period defined for example by a safety level, guarantees reliable operation at any time. As an alternative, there may be tests on demand whenever the safety function of the sensor is required. If a self test detects a fault, this could be reported via an error signal or, as usual in safety applications, the sensor outputs a safety-related stop signal causing a monitored source of danger to enter a safe state, such as stopping a machine.

The control and evaluation unit preferably is configured to check consistency of the second time of flight information over repeated measurements, and in particular to output a warning in case of intolerable fluctuations. This is another test that complements the self-testing of the time of flight measurement. The check may be based on the initial avalanche photodiode activity introduced above, in particular the count NO of the second histogram. The check uncovers ambient conditions like highly fluctuating external light that do not allow for reliable operation even if the sensor in itself is completely functional.

The internal test illumination unit preferably is configured to homogeneously illuminate the avalanche photodiode elements. More preferably, not only a part of the avalanche photodiode elements, but all of them are illuminated. Thus, the activity of the avalanche photodiode elements is increased by a comparable level, and the self test is not superimposed by effects of irregular illumination

The control and evaluation unit preferably is configured to monitor a signal strength of the internal test illumination, in particular based on a signal of avalanche photodiode elements other than the avalanche photodiode elements providing the time of flight information for self-testing. If the comparison of first and second time of flight information does not meet expectations, another reason but a fault of the sensor could be that the internal test illumination has weakened due to aging or the like. It is therefore advantageous to check for that effect. Preferably, for monitoring the signal strength of the internal test illumination, avalanche photodiode elements other than those that are connected to time of flight measuring units are used.

The control and evaluation unit preferably is configured to adapt the power of the internal test illumination. If it is decided that the internal test illumination is affected by drift effects like aging, the sensor at least to a certain degree can compensate for the degeneration by increasing the optical output power of the internal test illumination. Thus, the sensor’s operation time can be prolonged.

The control and evaluation unit preferably is configured to evaluate the time of flight information, in particular check for objects in a distance that is not allowed for safety reasons, and to output a safety-related signal based on the evaluation. In this embodiment, the time of flight information, or a distance value derived from that, is evaluated according to requirements of a specific safety application. A typical example are objects coming too close to a source of danger protected by the sensor, or violation of a configured protection zone where no objects and thus persons are allowed for safety reasons. A safety evaluation preferably has a binary result that a monitored source of danger either is safe or is not safe, meaning that a monitored machine may continue to work or has to immediately enter a safe state, often with an emergency stop.

The method according to the invention detects a fault in the receiving path and/or evaluation of a time of flight measurement based on avalanche photodiode elements operated in Geiger mode. The method can be modified in a manner similar to the sensor according to the invention and shows similar advantages. Further advantageous features are described in the dependent claims following the independent claims in an exemplary, but non-limiting manner.

The invention will be explained in the following also with respect to further advantages and features with reference to exemplary embodiments and the enclosed drawing. The Figures of the drawing show in:

- Fig. 1 a simplified schematic view of an optoelectronic sensor;
- Fig. 2 an overview showing the detection and evaluation path of the sensor according to Figure 1;
- Fig. 3 exemplary frequency distributions or histograms of a time of flight measurement with and without additional internal test illumination;
- Fig. 4 an illustration of the arrangement of an internal test illumination as well as a region of interest and a light transmitter test region of a SPAD-based light receiver;
- Fig. 5 a plan view of the SPAD-based light receiver according to Figure 4 and its region of interest and a internal test illumination reference region; and
- Fig. 6 an exemplary flow chart of a method for measuring distances with the sensor according to Figure 1, and for self-testing the sensor.

Figure 1 shows a simplified schematic view of an optoelectronic sensor 10 for measuring distances according to a time of flight principle in a one-dimensional embodiment. A light transmitter 12, for example an LED or a laser light source, transmits a light signal 14 into a monitoring area 16. In case that there is an object 18, a part of the light is diffusely remitted or reflected and returns to the sensor 10 as a remitted light signal 20, where it is registered in a light receiver 22.

Light receiver 22 comprises a plurality of pixel elements 24, also referred to as SPADs (Single-Photon Avalanche Diode) that are operable in a Geiger mode in order to trigger an avalanche event upon light reception by biasing them with a bias voltage greater than a breakdown voltage. Some basic SPAD properties have been described in the introduction. The pixel elements 24 are preferably arranged in a matrix. The number of pixel elements 24 may vary, the matrix for example may be a quadratic or rectangular arrangement with some tens, hundreds or even thousands of pixel elements 24 and more.

The light receiver 22 is connected to a sensor control block 26. In Figure 1, this is only shown summarily, sub structure of sensor control block 26 will be explained below with reference to Figure 2. The sensor control block 26 operates the light transmitter 12 so that it transmits the light signal 14, preferably with a short pulse in the nanosecond or even picosecond regime. The point in time when a light signal 14 is triggered may be used as a reference for time of flight measurement. In other embodiments, the transmitted light signal 14 may be used as an optical reference by means of an optical short-cut for part of the transmitted light. The sensor control block 26 also processes signals of the pixel elements 24, which are evaluated in order determine the time of flight from a transmission point in time of the transmitted light signal 14 until a reception point in time of the remitted light signal 20, respectively. The time of flight can be converted into a distance using the speed of light.

The sensor 10 further comprises an internal test illumination 28 having a light source such as an LED or laser in a spectrum that is detected by the pixel elements 24. The internal test illumination 28 is also operated by sensor control block 26 and can be activated to illuminate the pixel elements 24 of light receiver 22. The internal test illumination 28 can be switched on and off, and in some embodiments also be controlled in its optical output, and thus is a means for artificially adding events detected in the pixel elements 24. This is used in a self-test of the sensor 10, detecting faults in the detection and evaluation thereof, which will be further explained below with reference to Figures 3 to 6. A failed self-test, i.e. detection of a fault, may result in output of a safety-related signal.

In practice, sensor 10 comprises additional elements, in particular transmission and reception optics as well as interfaces, which are omitted for simplicity. Dividing light receiver 22 and sensor control block 26 as in Figure 1 is possible in a practical embodiment, but this is mainly for the sake of the explanation. Preferably, these components are at least partially integrated on a same chip whose surface is shared by the pixel elements 24 and circuitry assigned or assignable to pixel elements 24 or groups of pixel elements 24 for their control and evaluation.

In Figure 1, there is a coaxial arrangement in that the light transmitter 12 is arranged in front of light receiver 22. Other coaxial arrangements are possible, for example using a beam splitter. A biaxial or triangulation arrangement is also conceivable, with light transmitter 12 and light receiver 22 arranged next to one another with a mutual displacement.

Sensor 10 may be a one-dimensional sensor of the scanning type as illustrated in Figure 1. Other embodiments include light barriers, light grids and laser scanners. Sensor 10 can output or display a distance value or can also operate as a switch in that a switch event is triggered on detection of an object in a specific distance range including a deviation from an expected distance range. In a safety application, the distance measurements are typically compared with safe distances or a configured protection zone, with a safety-related signal being output in case of detection of an object where it is not allowed. The safety-related signal for example stops a monitored machine, or in more general terms ensures a safe state of a monitored source of danger, which also could be achieved by other measures than an emergency stop, like evasive movement or slower movement.

A plurality of sensors 10 can be combined, for instance to form a distance-measuring or distance-monitoring light grid. Mobile systems are also conceivable in which the sensor 10 is mounted movably, or scanning systems in which the transmitted light signal 14 sweeps over monitored area 16 by means of a movable mirror, or by moving the measuring system, in particular with a rotary movement.

Figure 2 shows light receiver 22 and components for measurement evaluation of the sensor control block 26 in a schematic view. The light receiver 22 is represented as a SPAD matrix with a plurality of pixel elements 24. Some of the pixel elements 24 are connected to time of flight measuring units 30, which in this embodiment are Time-to-Digital Converters (TDCs). Switching means 32 determine the connections, i.e. which pixel elements 24 are selected for evaluation, and by which time of flight measuring unit 30. Time of flight information generated by the time of flight measuring units 30 is accumulated and evaluated by a control and evaluation unit 34, preferably after storing the accumulated time of flight measurement information in a memory that is not separately shown, and preferably accumulated in the form of a histogram. One result of the evaluation is a distance value, which may be basis for further evaluations like a safety evaluation of configured protection zones.

The light receiver 22 and its SPAD pixel elements 24 are a direct converter of received photons into a digital signal and could be called a PDC (Photon-to-Digital Converter). The SPAD signals are considered digital because at least in theory the avalanche signal is the same for only a single triggering photon as for an infinite number of triggering photons. The light receiver 22 therefore has a very high dynamic compression, which is a significant advantage in optical time of flight measurement where the received signal varies of several orders of magnitude with distance and object reflectivity.

Switching means 32 may be configured as a programmable matrix or any other means to connect selected pixel elements 24 to a selected time of flight measuring unit 30 in a one-to-one or a many-to-one fashion. Not all pixel elements 24 are to be evaluated. One reason for selected connections is that a huge number of time of flight measuring units 30 equal to the number of pixel elements 24 is not feasible, or at least too costly and chip area consuming. Thus, the number of time of flight measuring units 30 preferably is only a fraction of the number of pixel elements. Another reason is that avalanche events are not only triggered by the photons of remitted light signal 20, but also by ambient light photons, other interference light or dark noise. The signal-to-noise ratio can be improved by selecting pixel elements 24 in a region of interest (ROI) actually receiving the remitted light signal 20. However, the selection of pixel elements 24 in a ROI can be based on other criteria, and a ROI does not even need to comprise pixel elements 24 in a mutual neighborhood. The selection can compensate for positional tolerances of the sensor’s 10 components, or in order to select functional pixels so that a light receiver 22 with one or more pixel defects can still be used to increase the yield. In one embodiment, an n x n-neighborhood of pixel elements 24 out of a total of 1,000 pixel elements 24 or more is selected, with a small n=2... 10, and connected to $n^2$ time of flight measuring units 30 in a one-to-one fashion.

The time of flight measuring units 30 measure the time between transmission of light signal 14 and reception of remitted light signal 20. The times of flight are raw distance measurements that still need correction with calibration information for internal delays and the like, and unit conversion based on the speed of light. Any known constant time offset in these times of flight can be compensated. Therefore the time of flight measuring units 30 can in one embodiment be started with transmission of light signal 14 and stopped by the detection event in the connected pixel element(s) 24. In another embodiment, they are started by the detection event and stopped at a reference time, with the offset between transmission point in time and reference time compensated. Each individual time of flight is very unreliable on its own because the avalanche effect might be caused by ambient light or dark noise, with the corresponding individual time of flight completely uncorrelated to the actual distance.

Therefore, the times of flight of the various time of flight measuring units 30 are accumulated and evaluated by control and evaluation unit 34. In an embodiment, time of flight information is accumulated in a histogram, which is an approximation of the time of flight distribution, with time bins on the X-axis and the number of avalanche events measuring the time of flight within one of these bins on the Y-axis. With a sufficient number of avalanche effects, the histogram will show a distinct peak whose position can be used to determine an overall time of flight, and thus the object’s 18 distance. Avalanche events can be accumulated over space, namely, from different time of flight measuring units 30, and/or time, namely, measurement repetitions. It is also possible to not form the entire histogram, but to partially evaluate avalanche events prior to accumulation and to thus exclude stray events at an early stage. There may be more than one peak, for example in case of half-transparent objects, glass, or fog. Such multiple targets can also be identified from the histogram. It can in particular detect contamination of a front screen of sensor 10 (predictive maintenance). Since the invention is not about histogram evaluation, the various possibilities are merely mentioned and will not be described in any detail.

As already mentioned, light receiver 22 and components of the sensor control block 26 may be integrated on a same chip. In a preferred embodiment, light receiver 22, time of flight measuring units 30 and switching means 32 are part of an ASIC (Application-Specific Integrated Circuit), while the control and evaluation unit 34 is implemented on a microprocessor. In yet another embodiment, histogram evaluation unit 34 at least partially is also integrated on the ASIC. The memory storing histograms may be part of the ASIC, the microprocessor, or a separate component.

Figure 3 shows exemplary frequency distributions or histograms of a time of flight measurement. The distinction between the continuous frequency distribution and a discrete histogram will no longer be maintained and a histogram be used in order to simplify explanation. A dashed line shows a histogram obtained from a measurement with inactive internal test illumination 28. At the beginning of a measurement at t=0, or in a first bin of the histogram, all SPADs are still available. To this end, the light receiver 22 preferably is inactive until measurement starts, in particular by increasing the bias voltage only with start of a measurement period at t=0. Caused by ambient light and other interference, some fraction of the SPADs will detect an event, resulting in a count of NO at t=0. This background activity will decrease exponentially over time, because once fired, the SPAD remains in its dead time on the time scale of a measurement. This is the pileup effect mentioned in the introduction. At a time where the remitted light signal 20 is detected, the histogram has a peak, the events of the peak adding to the pileup so that the background activity resumes at a lower level after the peak. The desired distance information can be obtained in that the control and evaluation unit 24 locates the peak, but this is known per se and not explained in any detail.

For testing the detection and evaluation of sensor 10, measurements can also be performed with the internal test illumination 28 being active. The test can be performed cyclically or on demand. A resulting histogram is shown in Figure 3 with a solid line. The internal test illumination 28 causes a significant increase of events, where significant means that it can be clearly evaluated. The effect is a stronger pileup: The fraction of SPADs and thus their total number triggering an event at t=0 is increased to N1, and the subsequent exponential decrease has a shorter time constant.

Since the control and evaluation unit 34 powers the internal test illumination 28 for a well-defined optical output, the expected effect on the pileup should be the same for a sensor 10 that is fully functional. This expectation can be stored in a teach-in or calibration, or it can be simulated or calculated from a model. When the actual difference between histograms with and without illumination deviates from that expectation by more than a tolerance, the self-testing is not successful and a fault is assumed. In other words, the self-test is based on an expected and a measured effect on the pileup when switching the internal test illumination 28, or with reference to Figure 3, on a comparison of the solid line and the dashed line.

The pileup effect is non-linear, and as can be inferred by the drop after the peak, to some degree depends on the distance of object 18 and its properties, in particular its reflectivity. Therefore, the comparison of the histograms and the definition of an expectation poses some challenges. These may simply be covered by enough of a tolerance.

In a preferred embodiment, however, effects of the non-linearities can be eliminated by restricting the comparison to the initial SPAD events at t=0, i.e. the first bin of the histogram and thus the values NO and N1. As a reminder, NO is a consequence of ambient light and other interference, while N1 has a well-defined additional contribution from the internal test illumination 28. The advantage of using the first bin is that all SPADs are still available, and that there is not yet a pileup effect so that a linear behavior can be expected.

In a numerical consideration, with

| | |
|---|---|
| NROI : | number of time of flight measuring units 30, e.g. twenty |
| Nacq : | Number of aquisitions or measurement repetitions, e.g. 100 |
| TBin: | Bin size, e.g. 100 ps |
| fBG : | Background rate, e.g. 55 Mcps |
| N0: | Events @ FBG0 with inactive internal test illumination 28 |
| N1 : | Events @ (FBG0 + FBG1) with active internal test illumination 28, |

it holds

$$N0 \cong NROI \cdot Nacq \cdot TLSB \cdot fBG0,$$

$$N1 \cong NROI \cdot Nacq \cdot TLSB \cdot (fBG0 + fBG1),$$

and thus

$$\Delta = (N1 - N0) = NROI \cdot Nacq \cdot TLSB \cdot fBG1.$$

In other words, the difference $\Delta$ is directly and linearly related to the internal test illumination 28 so that an expectation can easily be derived and tested. The self test could even be repeated with different output power of the internal test illumination 28, the expectation just scales linearly.

The consideration is simplified in that it ignores variable such as photon detection efficiency, pixel area and optical pathways. This is justified because they could be calibrated or would have a same effect for active and inactive internal test illumination 28.

The subsequent course of the histogram is determined by an exponential decrease that can also be evaluated, giving clear indication as to whether the time of flight measurement units 30 are fully functional. Of course, the expectation would not be met with dysfunctional pixel elements 24, so that the SPADs also are tested. In summary, evaluating the first bin of the histogram and/or the subsequent pileup reflected in the course of the histogram is a diverse data source that can guarantee the reliable function of sensor 10. Figure 4 shows an illustration of the arrangement of the internal test illumination 28 with respect to light receiver 22 for another embodiment of sensor 10. A region of interest 36 of pixel elements 24 that are connected to time of flight measuring units 30 form a direct neighborhood in this example, but these pixel elements 24 could also be distributed over light receiver 22 in another configuration using switching means 32. For the same reason, lens 38 forming a beam from remitted light 20 and directing the beam to region of interest 36 is purely an example.

If the self-testing indicates a fault, this might actually not be a problem of the SPADs or pixel elements 24, the time of flight measuring units 30, switching means 32, or subsequent evaluation in control and evaluation unit 34. It could also be that the internal test illumination 28 has weakened. LEDs, for example, during their lifetime degrade by an order of magnitude of 30%, and other light sources show similar aging effects. Therefore, in an embodiment, an internal test illumination reference region 40 is defined, preferably non-overlapping with region of interest 36. Since not all pixel elements 24 are connected to time of flight measuring units 30, there remains enough of a pool for that selection. The number of pixel elements 24 in region of interest 36 and test illumination reference region 40 preferably is the same. An example arrangement is also shown in a supplementary plan view in Figure 5. In case that a degradation of internal test illumination 28 is detected, a maintenance warning can be output. Moreover, the output power or LED current can be increased in order to compensate for the detected loss.

Another possible check that is not illustrated in the Figures is based on tracking the fluctuations of N0, which is a measure for the interference level, in particular ambient light. The sensor 10 could display or output a warning if the environment does not allow for reliable measurement, for example due to strong and frequent fluctuations in ambient light.

Figure 6 shows an exemplary flow chart of a method for measuring distances with sensor 10, and for self-testing sensor 10.

In a step 1, sensor 10 measures with the internal test illumination 28 being active. This results in a histogram as shown in Figure 3 with a solid line. The pileup is a consequence of interference like ambient light, superimposed by the internal test illumination and a measurement peak.

In a step 2, sensor 10 measures again, but with the internal test illumination 28 being inactive. This results in a histogram as shown in Figure 3 with a dashed line. The contribution of internal test illumination 28 of course is no longer present. The order of steps 1 and 2 may of course be reversed. Moreover, it is not necessary to perform both measurements in each and every measurement cycle, the testing can only be done with longer cycle times or on demand. Whenever not self-testing is required, it is enough to measure once, preferably with step 2.

A step 3 is the actual self-testing, where the results of step 1 and step 2 are compared. This has been explained in detail with reference to Figure 3.

In a step 4, when the self-testing is successful and the sensor 10 found to be fully functional, the peak is located, and a distance value is determined. The distance evaluation can be based on either histogram, or both.

In an optional step 5, the distance value can be used in a safety evaluation, for example to find out whether an object violated a protection zone.

In a step 6, if a danger is detected by the safety evaluation of step 5, a safety-related signal is output and for example stops a monitored machine.

If no danger is detected, or there is no safety evaluation in the first place, the measurement can be repeated in a new measurement cycle in step 1.

In the alternative of step 4, when the self-testing results in an intolerable difference and thus a fault is assumed, this may still be only due to aging of the internal test illumination 28.

In a step S7, it is therefore checked whether the internal test illumination 28 is still fully operable, as explained above with reference to Figures 4 and 5.

Should output power be sufficient, this is no excuse for the fault, the sensor 10 is no longer considered to be functional, and the safety-related signal is output in step S6.

In a step S8, on the other hand, if degradation of the internal test illumination 28 has been detected, this is compensated by adapting the power or current of the internal test illumination 28, and the measurement cycle is repeated in step 1 to find out whether the sensor 10 is functional after the internal test illumination 28 adaption.

## Claims

1. An optoelectronic sensor (10) for measuring a distance of an object (18) in a monitoring area (16) in accordance with a time of flight principle, the sensor (10) comprising a light transmitter (12) for transmitting a light signal (14), a light receiver (22) having a first plurality of avalanche photodiode elements (24) operable in a Geiger mode for receiving the light signal (20) after reflection or remission in the monitoring area (16), at least one time of flight measuring unit (30) connected to an avalanche photodiode element (24) for determining time of flight information between transmission and reception of a light signal (14, 20), and a control and evaluation unit (34) configured to process the time of flight information,
   **characterized in that** the sensor (10) comprises an internal test illumination (28) configured to additionally illuminate the avalanche photodiode elements (24), and **in that** the control and evaluation unit (34) is further configured for self-testing the sensor (10) by comparing first time of flight information obtained with the internal test illumination (28) active and second time of flight information obtained with the internal test illumination (28) inactive.

2. The sensor (10) according to claim 1,
   comprising a second plurality of time of light measurement units (30), the second plurality being less than the first plurality, the time of flight measuring units (30) in particular each comprising a TDC.

3. The sensor (10) according to claim 2,

comprising switching means (32) for connecting selected avalanche photodiode elements (24) to time of flight measuring units (30), the switching means (32) in particular comprising a matrix of programmable interconnections.

**4.** The sensor (10) according to any of the preceding claims,
comprising a first circuit, in particular an ASIC, for the avalanche photodiode elements (24) and the time of flight measuring units (30), and a second circuit, in particular a microprocessor, for the control and evaluation unit (34).

**5.** The sensor (10) according to any of the preceding claims,
comprising a memory for accumulating time of flight information over a plurality of time of flight measuring units (30) and/or a plurality of measurement repetitions, in particular in a histogram.

**6.** The sensor (10) according to any of the preceding claims,
wherein the control and evaluation (34) is configured to, during the self-testing, compare accumulated time of flight information, in particular a first histogram accumulated with the internal test illumination (28) active and a second histogram accumulated with the internal test illumination (28) inactive.

**7.** The sensor (10) according to any of the preceding claims,
wherein the control and evaluation unit (34) is configured to, during the self-testing, compare time of flight information for an initial avalanche photodiode element (24) activity at the beginning of a measurement, in particular in a first bin of a first histogram accumulated with the internal test illumination (28) active and in a first bin of a second histogram accumulated with the internal test illumination (28) inactive.

**8.** The sensor (10) according to any of the preceding claims,
wherein the control and evaluation unit (349 is configured to cyclically activate the internal test illumination (28) for self-testing, and/or to output an error or a safety-related signal in case of a failed self-testing.

**9.** The sensor (10) according to any of the preceding claims,
wherein the control and evaluation unit (34) is configured to check consistency of the second time of flight information over repeated measurements, and in particular to output a warning in case of intolerable fluctuations.

**10.** The sensor (10) according to any of the preceding claims,
wherein the internal test illumination unit (28) is configured to homogeneously illuminate the avalanche photodiode elements (24).

**11.** The sensor (10) according to any of the preceding claims,
wherein the control and evaluation unit (34) is configured to monitor a signal strength of the internal test illumination (28), in particular based on a signal of avalanche photodiode elements (24) other than the avalanche photodiode elements (24) providing the time of flight information for self-testing.

**12.** The sensor (10) according to any of the preceding claims,
wherein the control and evaluation unit (249 is configured to adapt the power of the internal test illumination (28).

**13.** The sensor (10) according to any of the preceding claims,
wherein the control and evaluation unit (34) is configured to evaluate the time of flight information, in particular check for objects (18) in a distance that is not allowed for safety reasons, and to output a safety-related signal based on the evaluation.

**14.** A method for measuring a distance of an object (18) in a monitoring area (16) in accordance with a time of flight principle, the method comprising the steps of transmitting a light signal (14),
receiving the light signal (20) after reflection or remission in the monitoring area (16) using a first plurality of avalanche photodiode elements (24) operable in a Geiger mode,
determining time of flight information from a signal of the avalanche photodiode elements (24), and
processing the time of flight information,
**characterized in that** first time of flight information obtained with an internal test illumination (28) illuminating the avalanche photodiode elements (24) and second time of flight information obtained without additionally illuminating the avalanche photodiode elements (24) is compared for self-testing.

Figure 1

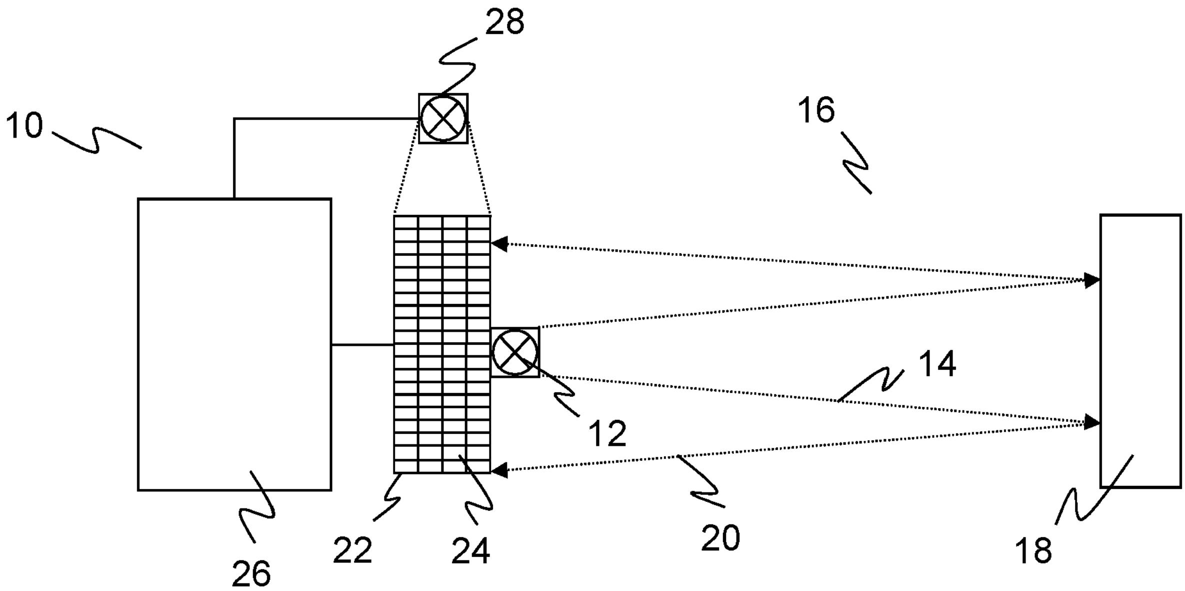


Figure 2

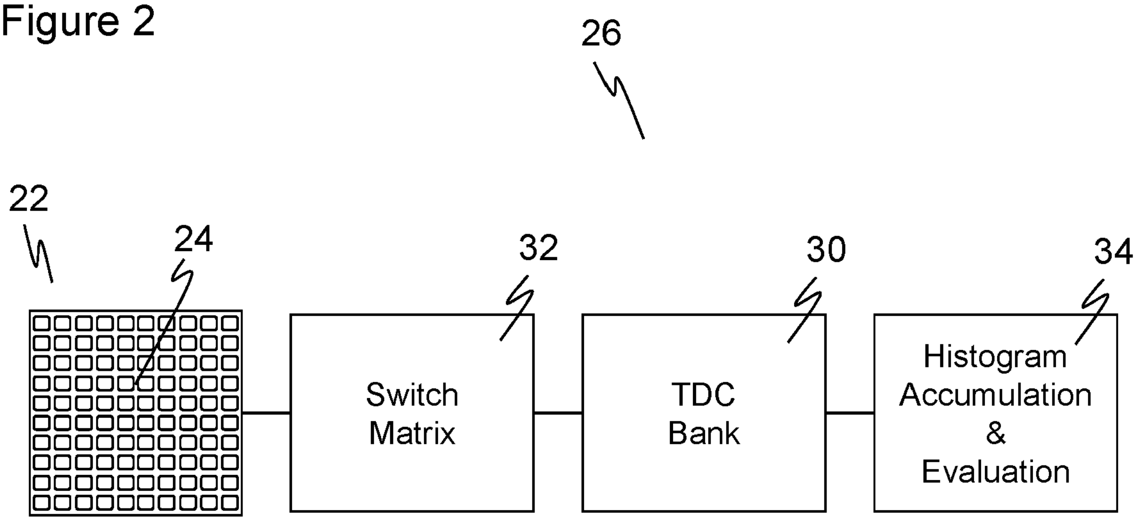

Figure 3

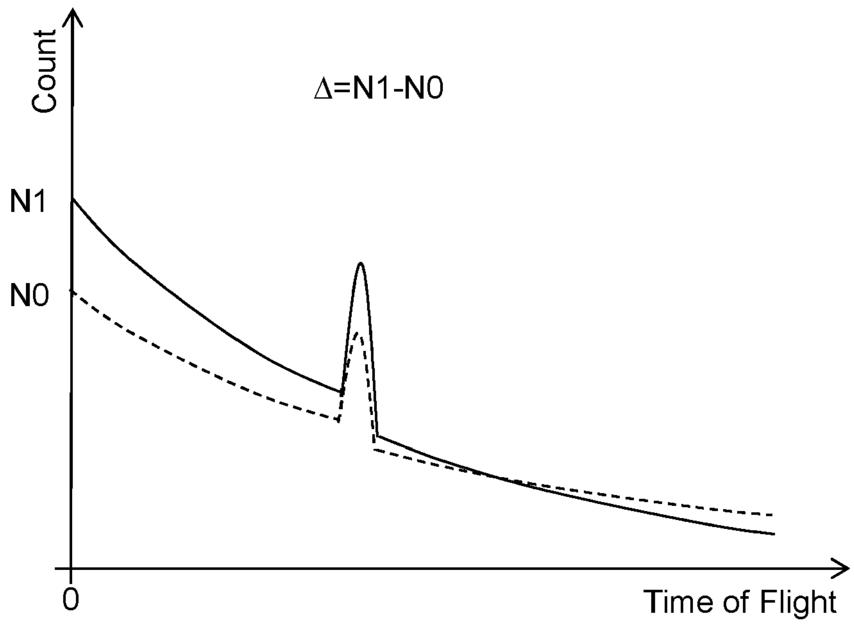


Figure 4

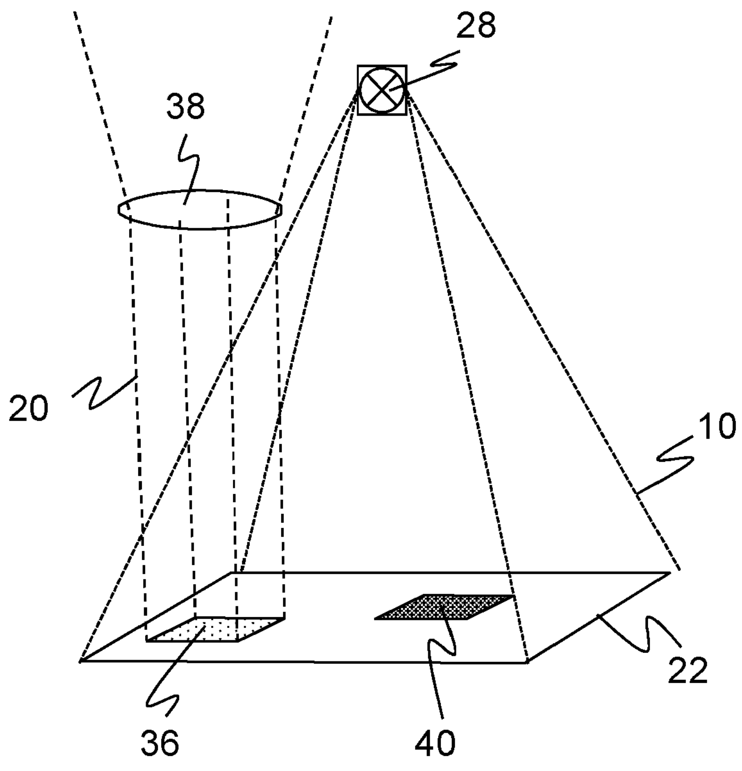

Figure 5

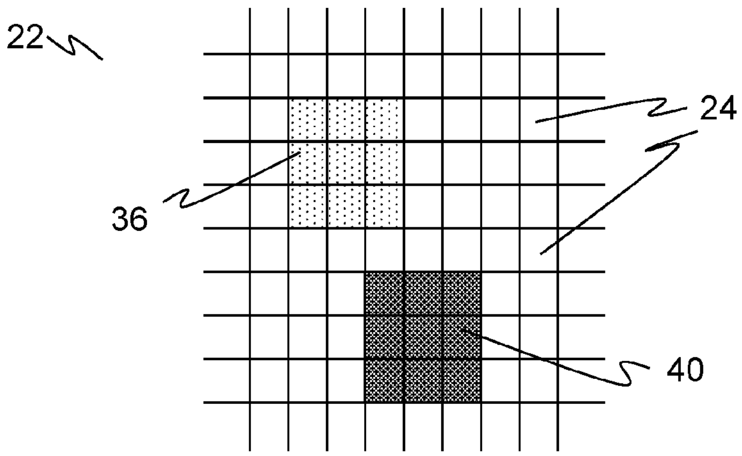


Figure 6

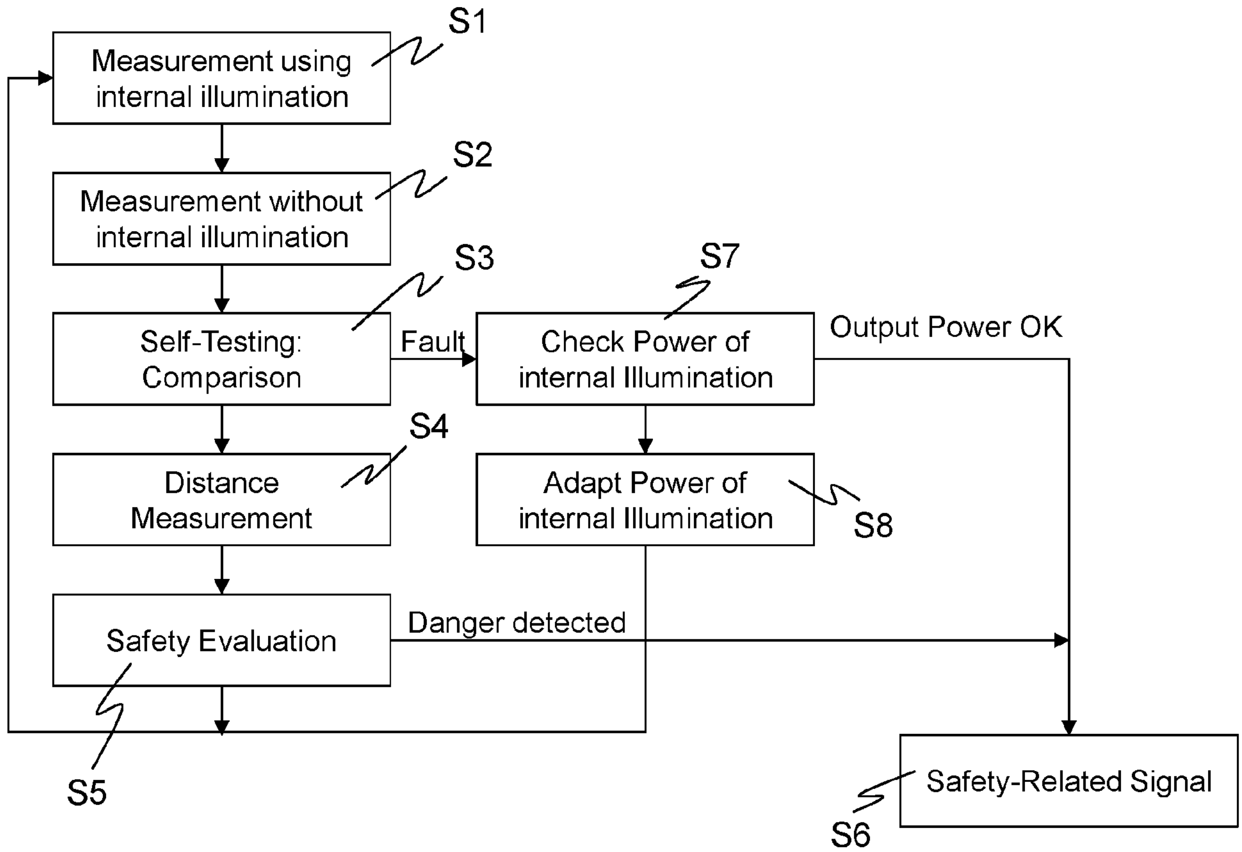

Europäisches Patentamt
European Patent Office
Office européen des brevets

# EUROPEAN SEARCH REPORT

Application Number
EP 20 20 6080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 543 734 A1 (SICK AG [DE]) 25 September 2019 (2019-09-25) * paragraphs [0033], [0036] - [0037], [0043] - [0044], [0047] - [0048], [0053] - [0054], [0056], [0059]; figures 1,3 * ----- | 1-14 | INV. G01S7/497 G01S7/481 G01S17/10 G01S17/88 |
| A | DE 199 13 156 A1 (LEUZE ELECTRONIC GMBH & CO [DE]) 12 October 2000 (2000-10-12) * paragraphs [0053], [0056], [0058]; figure 1 * ----- | 1,14 | |
| A | DE 10 2006 032113 B3 (PEPPERL & FUCHS [DE]) 6 September 2007 (2007-09-06) * paragraphs [0052] - [0053]; figure 1 * ----- | 1,14 | |

TECHNICAL FIELDS SEARCHED (IPC)

G01S

The present search report has been drawn up for all claims

1

| Place of search | Date of completion of the search | Examiner |
|---|---|---|
| Munich | 15 April 2021 | Theißing, Nikolaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 20 6080

This annex lists the patent family members relating to the patent documents cited in the above-mentioned European search report. The members are as contained in the European Patent Office EDP file on
The European Patent Office is in no way liable for these particulars which are merely given for the purpose of information.

15-04-2021

| Patent document cited in search report | Publication date | Patent family member(s) | Publication date |
|---|---|---|---|
| EP 3543734 A1 | 25-09-2019 | DE 102018106793 A1<br>EP 3543734 A1 | 26-09-2019<br>25-09-2019 |
| DE 19913156 A1 | 12-10-2000 | NONE | |
| DE 102006032113 B3 | 06-09-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0902402 B1
- EP 1269762 B1
- DE 102007008806 B3
- DE 102018124837 B3
- EP 3428683 B1